Europäisches Patentamt

European Patent Office

Office européen des brevets

(11) Veröffentlichungsnummer: **0 418 452 A1**

## EUROPÄISCHE PATENTANMELDUNG

(21) Anmeldenummer: **90101587.5**

(22) Anmeldetag: **26.01.90**

(51) Int. Cl.⁵: **A01N 25/16, A01N 25/10, A01N 3/04**

(30) Priorität: **18.09.89 DE 3931107**

(43) Veröffentlichungstag der Anmeldung:
**27.03.91 Patentblatt 91/13**

(84) Benannte Vertragsstaaten:
**AT BE CH DE DK ES FR GB GR IT LI LU NL SE**

(71) Anmelder: **HAGO CHEMOTECHNIK VERTRIEBS GMBH**
**Bodenseestrasse 217**
**W-8000 München 60(DE)**

(72) Erfinder: **Eissler, Walter**
**Am Schlosspark 5**
**W-8911 Windach(DE)**
Erfinder: **Frey, Bernhard**
**Wutöschingerstrasse 16**
**W-7895 Lettgau 3, Rechberg(DE)**

(74) Vertreter: **Patentanwälte Grünecker,**
**Kinkeldey, Stockmair & Partner**
**Maximilianstrasse 58**
**W-8000 München 22(DE)**

(54) **Anti-Wildverbissmittel und Anti-Wildverbissmittel-Spender.**

(57) Anti-Wildverbißmittel, umfassend ein Trägermaterial und einen freisetzbaren, wildverscheuchenden Duftstoff, dadurch gekennzeichnet, daß das Trägermaterial ein fließfähiges, an UV-Stabilisatoren freies Prepolymer ist, das sich zu einem halbharten bis harten Schaum, welcher den Duftstoff einschließt, verschäumen läßt.

Das erfindungsgemäße Anti-Wildverbißmittel wirkt zuverlässig über mehrere Jahre und kann in einfacher Weise sauber und gezielt ausgebracht werden.

EP 0 418 452 A1

# ANTI-WILDVERBISSMITTEL UND ANTI-WILDVERBISSMITTEL-SPENDER

Die vorliegende Erfindung betrifft ein Anti-Wildverbißmittel, umfassend ein Trägermaterial und einen freisetzbaren, wildverscheuchenden Duftstoff. Die Erfindung betrifft weiterhin einen Anti-Wildverbißmittel-Spender.

Zur Verhinderung von Wildverbißschäden in Land- und Forstwirtschaft sind sowohl mechanische als auch chemische Mittel im Einsatz. Zu den mechanischen Mitteln zählen beispielsweise Schutzzäune. Die Errichtung von Schutzzäunen ist jedoch nicht immer erwünscht bzw. möglich, wie z.B. in Gebirgsregionen.

Wildverbißschäden werden jedoch hauptsächlich mit chemischen Präparaten bekämpft, die entweder auf die von Wildverbiß gefährdeten Pflanzen aufgebracht werden oder auf dem Boden versprüht bzw. verspritzt werden. Bekannt sind beispielsweise Wildverbißmittel auf Basis von Teer, Petroleum, Kresol oder Nikotinsulfat. Diese Mittel sind jedoch zum Teil für Mensch, Tier und Pflanze giftig. Andererseits verursachen viele solcher Mittel, beispielsweise alle Mittel, die Teer oder Teerinhaltsstoffe in isolierter Form enthalten, eine Wachstumsstörung der damit behandelten Pflanzen.

Das DE-GM 76 11 644 beschreibt einen mechanischen Duftstoffträger gegen Wildverbiß, bestehend aus einer dachförmigen Haube, die auf einer Stütze, die insbesondere als Erdspieß ausgebildet ist, aufgesetzt ist. Unter der Haube ist ein mit ätherischem Spezialöl getränkter Schaumstoffschwamm angeordnet. Durch diese Anordnung soll verhindert werden, daß der Duftstoff durch Niederschläge ausgespült und verwässert wird.

Die EP-A-181543 beschreibt die Verwendung wäßriger Polymer-Dispersionen einer mittleren Filmbildungstemperatur von 0 bis 35°C als Wildverbißmittel. Diese Dispersionen werden durch Versprühen auf junge Forstkulturen aufgebracht und bilden nach dem Trocknen einen geruchlosen Belag. Zwar wird erwähnt, daß die aus den Polymerdispersionen gebildeten Beläge mehrere Jahre wirksam sein sollen. Es liegt jedoch auf der Hand, daß die nach- bzw. neuwachsenden Pflanzentriebe diesen schützenden Belag nicht mehr aufweisen und die Forstkulturen daher schon nach relativ kurzer Zeit wieder im gleichen Ausmaß wildverbißgefährdet sind, wie unbehandelte Pflanzen.

Der vorliegenden Erfindung liegt die Aufgabe zugrunde, ein Anti-Wildverbißmittel anzugeben, das über einen langen Zeitraum zuverlässig wirkt und in einfacher Weise sowie gezielt ausgebracht werden kann.

Diese Aufgabe ist erfindungsgemäß durch ein Anti-Wildverbißmittel der eingangs genannten Art dadurch gelöst, daß das Trägermaterial ein fließfähiges, an UV-Stabilisatoren freies Prepolymer ist, das sich zu einem halbharten bis harten Schaum, welcher den Duftstoff einschließt, verschäumen läßt.

Als Trägermaterial für das erfindungsgemäße Anti-Wildverbißmittel eignen sich alle fließfähigen bzw. flüssigen Prepolymere, die sich zu einem halbharten bis harten Schaum verschäumen lassen, der unter Einwirkung von UV-Strahlen (Tageslicht) langsam verwittert. Die überwiegend geschlossenen Zellen des Schaums schließen den wildverscheuchenden Duftstoff ein, so daß dieser homogen in das Trägermaterial eingebettet ist. Durch die langsame Verwitterung des Schaums wird somit stets nur an der Oberfläche Duftstoff frei, so daß das erfindungsgemäße Anti-Wildverbißmittel über mehrere Jahre zuverlässig wirkt (Langzeit-Depotwirkung).

Als Trägermaterial eignet sich insbesondere ein Polyurethan-Prepolymer aus einem Ein- oder Mehrkomponentensystem, das sich zu einem halbharten bis harten Polyurethanschaum mit überwiegend geschlossenen Zellen verschäumen läßt. In Abwesenheit von UV-Stabilisatoren löst sich dieser unter Einwirkung von Tageslicht je nach Schichtstärke in 1 bis 3 Jahren allmählich auf. Ausgehärteter Polyurethanschaum ist ungiftig und übt keinerlei wachtumsstörenden Einflüsse auf die Pflanzen aus. Bei entsprechenden Untersuchungen konnten weiterhin keine umweltschädlichen Abbauprodukte festgestellt werden.

Polyurethane werden bekanntermaßen nach dem Diisocyanat-Polyadditionsverfahren hergestellt. Die zur Herstellung von Polyurethan-Prepolymeren bzw. Polyurethanschaum erforderlichen Ausgangskomponenten und Bedingungen sind dem Fachmann hinreichend bekannt.

Als wildverscheuchende Duftstoffe eignen sich die für diesen Zweck bekannten flüssigen und/oder festen Substanzen. Als besonders wirksam hat sich jedoch die Verwendung einer synthetischen Nachstellung von konzentriertem menschlichen Schweiß erwiesen. Entsprechende Präparate sind im Handel erhältlich bzw. in der Literatur beschrieben (siehe beispielsweise Römpps Chemie-Lexikon, 8. Auflage, Band 5, S. 3768 (1987)). Diese Präparate können für Mensch, Tier und Pflanze als ungiftig angesehen werden und lassen auch sonst keine umweltschädlichen Einflüsse erwarten.

Der Duftstoff ist im erfindungsgemäßen Anti-Wildverbißmittel geeigneterweise in einer Menge von 1 bis 5 Gew-%, bezogen auf das gesamte Anti-Wildverbißmittel, vorhanden. Vorzugsweise wird der Duftstoff in einer Menge von 1,5 - 2,5 Gew.-%, insbesondere bevorzugt 2 Gew.-%, verwendet.

Gegenstand der Erfindung ist ebenso ein Anti-Wildverbißmittel-Spender, umfassend ein unter Druck befindliches Behältnis mit einer Dosiereinrichtung, in dem ein gasförmiges Treibmittel sowie ein erfindungsgemäßes Anti-Wild-Verbißmittel, wie oben beschrieben, enthalten sind.

Mittels eines derartigen Spenders kann das erfindungsgemäße Anti-Wildverbißmittel sicher gelagert und auf saubere, einfache und umweltgerechte Art und Weise dosierbar und gezielt ausgebracht werden.

Vorteilhafterweise wird der erfindungsgemäße Anti-Wildverbißmittel-Spender in Kombination mit einer auf das Behältnis aufmontierbaren Spritzpistole verwendet. Dies hat unter anderem den Vorteil, daß das Anti-Wildverbißmittel sehr gut regulierbar und bedienungsfreundlich ausgebracht werden kann. Mit einer derartigen Spritzpistole versehen kommt es auch bei längeren Pausen zwischen der Ausbringung zu keiner unerwünschten Aushärtung an der Dosieröffnung ·und der erfindungsgemäße Anti-Wildverbißmittel-Spender ist stets einsatzbereit. Spritzpistolen für gasförmige Treibmittel enthaltende, unter Druck befindliche Behältnisse, wie Aerosoldosen, sind im Handel erhältlich. Beispielsweise eignet sich eine unter der Bezeichnung Pageris R erhältliche Pistole.

Zur Herstellung eines erfindungsgemäßen Spenders werden die zur Bildung eines Prepolymeren notwendigen Ausgangskomponenten, der Duftstoff und ein gasförmiges Treibmittel mittels Dosiereinrichtungen in geeignete Behältnisse, wie Aerosoldosen, abgefüllt und diese mit einer Dosiereinrichtung, d.h. einem Ventilsystem, ausgestattet.

Im Falle von Polyurethan als Trägermaterial werden beispielsweise als Ausgangskomponenten ein Polyol und ein Polyisocyanat eingefüllt, die dann innerhalb des Behältnisses ein Polyurethan-Prepolymer bilden. Das ebenfalls eingepreßte gasförmige Treibmittel wirkt hierbei fördernd als Lösungs- bzw. Reaktionsvermittler. Der weiterhin eindosierte Duftstoff wird dabei homogen in dem Prepolymer verteilt. Nach dem dosierbaren Ausbringen aus dem Behältnis bildet das Prepolymer einen Schaum, der durch die Umgebungsfeuchtigkeit zu einem halbharten bis harten Polyurethanschaum aushärtet. Da dem Schaum keine UV-Stabilisatoren beigesetzt sind, verwittert dieser langsam unter der Einwirkung von Tageslicht und unter ständiger Freisetzung des wildverscheuchenden Duftstoffes.

Der erfindungsgemäße Anti-Wildverbißschaum kann beispielsweise in Form einer Einzelimpfung pro Pflanze bzw. Baum, als Sprühausbringung oder Flächenbesprühung angewendet werden.

Außer zur Verhinderung von Wildverbiß- und Schälschäden in der Land- und Forstwirtschaft eignet sich das erfindungsgemäße Anti-Wildverbißmittel beispielsweise auch als Schutz-Duftzaun zur Verhütung von Wild-Verkehrsunfällen. Bei dieser Anwendung wird das Anti-Wildverbißmittel an den Rändern von wildunfallgefährdeten Verkehrswegen, wie Straßen und Eisenbahnschienen, versprüht. In den meisten Fällen genügt es hierbei, wenn das Anti-Wildverbißmittel in mehr oder weniger regelmäßigen Abständen ausgetragen wird, wobei der gebildete Schaum als Schutz-Duftzaun, der das Wild verscheucht, wirkt.

Bei einer anderen Anwendung kann das erfindungsgemäße Anti-Wildverbißmittel als Antimarderschaum in Kraftfahrzeugen eingesetzt werden. Selbstverständlich ist hierbei das erfindungsgemäße Mittel nicht nur gegenüber Mardern, sondern auch gegenüber anderen Tieren wirksam, welche die Vorliebe haben, in Kraftfahrzeugen zugängliche Kunststoffteile, wie etwa Schläuche und Dichtungen, zu verbeißen. Das erfindungsgemäße Mittel kann hierbei direkt auf die zu schützenden Kunststoffteile oder auch an anderer geeigneter Stelle aufgebracht werden.

Beispiel

Ein erfindungsgemäßes Anti-Wildverbißmittel auf Polyurethanschaum-Basis mit einem Gehalt von 2 Vol.-% synthetischem menschlichen Schweiß als Duftstoff wurde auf einer Reben-Versuchsfläche getestet. Es wurden Reben großflächig, aber auch einzelne kleine Parzellen, die ganz besonders verbißgefährdet waren, behandelt.

Nach Ausbringung des erfindungsgemäßen Anti-Wildverbißmittels war schlagartig kein neuer Verbiß mehr festzustellen.

Ferner wurde das erfindungsgemäße Anti-Wildverbißmittel auf einem Teil einer stillgelegten Fläche, die durch hohen Bewuchs an Gras und Wildkräutern vom Rehwild auch sehr gerne als Einstand angenommen wurde, angewendet. Zur Kontrolle wurde der behandelte Teil an den Seiten gefräst, so daß auch bei trockener Witterung immer genau abgefährtet werden konnte. Auch hier bestätigte sich die uneingeschränkte Wirksamkeit des erfindungsgemäßen Anti-Wildverbißmittels.

Ansprüche

1. Anti-Wildverbißmittel, umfassend ein Trägermaterial und einen freisetzbaren, wildverscheuchenden Duftstoff, **dadurch gekennzeichnet**, daß das Trägermaterial ein fließfähiges, an UV-Stabilisatoren freies Prepolymer ist, das sich zu einem halbharten bis harten Schaum, welcher den Duftstoff einschließt, verschäumen läßt.

2. Anti-Wildverbißmittel nach Anspruch 1, **dadurch gekennzeichnet**, daß das Trägermaterial ein Polyurethan-Prepolymer aus einem Ein- oder Mehrkomponentensystem ist.

3. Anti-Wildverbißmittel nach Anspruch 1 oder 2, **dadurch gekennzeichnet**, daß der Duftstoff eine synthetische Nachstellung von hochkonzentriertem menschlichen Schweiß ist.

4. Anti-Wildverbißmittel nach mindestens einem der Ansprüche 1 bis 3, **dadurch gekennzeichnet**, daß der Duftstoff in einer Menge von 1 bis 5 Gew.-%, bezogen auf das gesamte Anti-Wildverbißmittel, vorliegt.

5. Anti-Wildverbißmittel nach Anspruch 4, **dadurch gekennzeichnet**, daß der Duftstoff in einer Menge von 1,5 - 2,5 Gew.-% vorliegt.

6. Anti-Wildverbißmittel-Spender, umfassend ein unter Druck befindliches Behältnis mit einer Dosiereinrichtung, in dem ein gasförmiges Treibmittel sowie ein Anti-Wildverbißmittel nach einem der Ansprüche 1 bis 5 enthalten sind.

7. Anti-Wildverbißmittel-Spender nach Anspruch 6, **dadurch gekennzeichnet**, daß die Dosiereinrichtung eine Spritzpistole umfaßt.

8. Verwendung eines Anti-Wildverbißmittels nach mindestens einem der Ansprüche 1 bis 5 zur Vermeidung von Wildverbiß-und Schälschäden in der Land- und Forstwirtschaft.

9. Verwendung eines Anti-Wildverbißmittels nach mindestens einem der Ansprüche 1 bis 5 als Schutz-Duftzaun zur Verhütung von Wild-Verkehrsunfällen.

10. Verwendung eines Anti-Wildverbißmittels nach mindestens einem der Ansprüche 1 bis 5 als Antimarderschaum in Kraftfahrzeugen.

## EUROPÄISCHER RECHERCHENBERICHT

Europäisches Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | GB - A - 2 051 577 (DEE JAY INDEPENDENT SERVICES GROUP INC) * Zusammenfassung; Ansprüche * -- | 1,2,10 | A 01 N 25/16 A 01 N 25/10 A 01 N 3/04 |
| X | US - A - 3 503 800 (W.R. EDDY) * Ansprüche * -- | 1,2,10 | |
| X | GB - A - 1 268 222 (M&T INTERNATIONAL NV) * Beispiel IX * -- | 1,2,10 | |
| A | CHEMICAL ABSTRACTS, Band 80, Nr. 6, 11. Februar 1974, Columbus, Ohio, USA S. YAMASHITA et al. "Ratproof nets and sheets" Seite 75, Zusammenfassung-Nr. 28 412m & Japan.Kokai 72 39,626 -- | 1,2 | |
| A | WO - A1 - 87/02 548 (W. FOPPE) * Zusammenfassung * ---- | 1,2,8 | RECHERCHIERTE SACHGEBIETE (Int Cl⁵) A 01 N |

Der vorliegende Recherchenbericht wurde für alle Patentansprüche erstellt

| Recherchenort | Abschlußdatum der Recherche | Prüfer |
|---|---|---|
| WIEN | 07-12-1990 | SCHNASS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82